# EUROPEAN PATENT SPECIFICATION

(11) **EP 3 145 123 B1**
(45) Date of publication and mention of the grant of the patent: **06.05.2020**
(21) Application number: 16189067.8
(22) Date of filing: 15.09.2016
(51) Int. Cl.: H04L 12/14, H04L 12/26

(54) **APPARATUS, METHOD AND PROGRAM PRODUCT FOR DATA BANDWIDTH OPTIMIZATION**
VORRICHTUNG, VERFAHREN UND PROGRAMMPRODUKT FÜR DATEN-BANDBREITENOPTIMIERUNG
APPAREIL, PROCÉDÉ ET PRODUIT DE PROGRAMME D'OPTIMISATION DE BANDE PASSANTE D'INFORMATIONS

(30) Priority: 15.09.2015 US 201514854734
(43) Date of publication of application: 22.03.2017
(73) Proprietor: Lenovo (Singapore) Pte. Ltd., Singapore 556741 (SG)
(72) Inventor: Peterson, Nathan J., Oxford, North Carolina 27565 (US); Mese, John Carl, Cary, NC North Carolina 27513 (US); VanBlon, Russell Speight, Raleigh, NC North Carolina 27615 (US); Waltermann, Rod D., Rougemont, NC North Carolina 27572 (US); Weksler, Arnold S., Raleigh, NC North Carolina 27613 (US)
(74) Representative: Leffers, Thomas

(56) References cited:
- EP-A1- 2 234 328
- CN-A- 104 243 266
- US-A1- 2015 229 584
- US-B1- 6 223 222

## Description

### FIELD

The subject matter disclosed herein relates to network connections and more particularly relates to data bandwidth optimization of a network connection.

### BACKGROUND

### DESCRIPTION OF THE RELATED ART

Information handling devices, such as desktop computers, laptop computers, tablet computers, smart phones, optical head-mounted display units, smart watches, etc., are ubiquitous in society. These information handling devices may use a network connection. The network connection used by information handling devices may have data bandwidth limitations. US 2015/0229584 A1 describes a network device that provides, to a user device, a user interface to configure preferences for a bandwidth boosting service. EP 2 234 328 A1 discloses a method for processing a resource request in NGN, which comprises the following steps: after receiving a service request sent by a user, a service control layer in NGN sending a corresponding resource request to a resource and admission control layer; and if the bandwidth applied in the resource request cannot be satisfied, the resource and admission control layer including the available bandwidth information into the corresponding resource request refusing message when refusing the request and transmitting it to the service control layer.

### BRIEF SUMMARY

An apparatus for data bandwidth optimization according to claim 1 is disclosed. A method and computer program product according to claims 6 and 12 respectively are also disclosed.

### BRIEF DESCRIPTION OF THE DRAWINGS

A more particular description of the embodiments will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1 is a schematic block diagram illustrating one embodiment of a system for data bandwidth optimization;
Figure 2 is a schematic block diagram illustrating one embodiment of an apparatus including an information handling device;
Figure 3 is a schematic block diagram illustrating one embodiment of an apparatus including a data bandwidth optimization module;
Figure 4 is a schematic block diagram illustrating another embodiment of an apparatus including a data bandwidth optimization module;
Figure 5 is a schematic flow chart diagram illustrating one embodiment of a method for data bandwidth optimization; and
Figure 6 is a schematic flow chart diagram illustrating another embodiment of a method for data bandwidth optimization.

### DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Certain of the functional units described in this specification have been labeled as modules, in order to more particularly emphasize their implementation independence. For example, a module may be implemented as a hardware circuit comprising custom very-large-scale integration ("VLSI") circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in code and/or software for execution by various types of processors. An identified module of code may, for instance, include one or more physical or logical blocks of executable code which may, for instance, be organized as an object, procedure, or function. Nevertheless, the executables of an identified module need not be physically located together, but may include disparate instructions stored in different locations which, when joined logically together, include the module and achieve the stated purpose for the module.

Indeed, a module of code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different computer readable storage devices. Where a module or portions of a module are implemented in software, the software portions are stored on one or more computer readable storage devices.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Code for carrying out operations for embodiments may be written in any combination of one or more programming languages including an object oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN") or a wide area network ("WAN"), or the connection may be made to an external computer (for example, through the Internet using an Internet Service Provider).

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. These code may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams block or blocks.

The code may also be stored in a storage device that can direct a computer, other programmable data processing apparatus, or other devices to function in a particular manner, such that the instructions stored in the storage device produce an article of manufacture including instructions which implement the function/act specified in the schematic flowchart diagrams and/or schematic block diagrams block or blocks.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart and/or block diagram block or blocks.

The schematic flowchart diagrams and/or schematic block diagrams in the Figures illustrate the architecture, functionality, and operation of possible implementations of apparatuses, systems, methods and program products according to various embodiments. In this regard, each block in the schematic flowchart diagrams and/or schematic block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

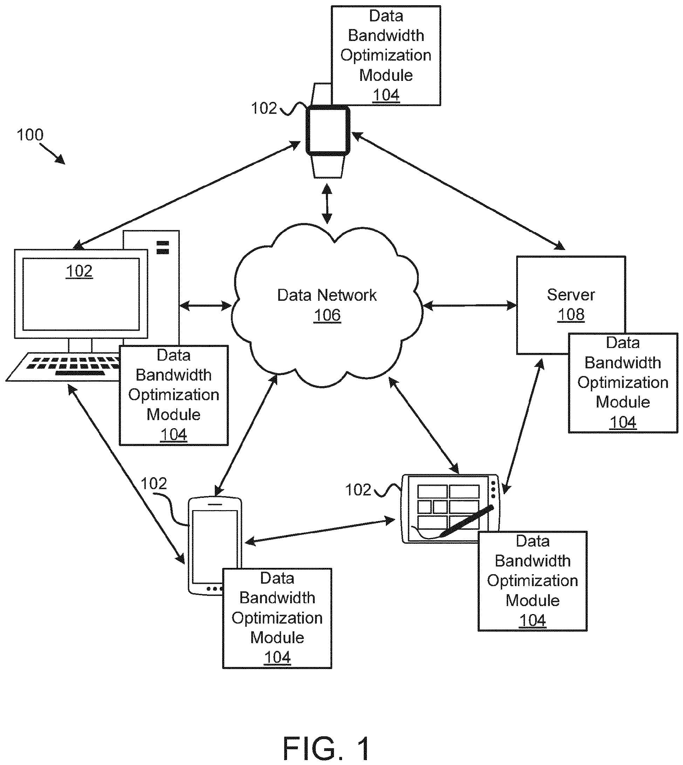

Figure 1 depicts one embodiment of a system 100 for data bandwidth optimization. In one embodiment, the system 100 includes information handling devices 102, data bandwidth optimization modules 104, data networks 106, and servers 108. Even though a specific number of information handling devices 102, data bandwidth optimization modules 104, data networks 106, and servers 108 are depicted in Figure 1, one of skill in the art will recognize that any number of information handling devices 102, data bandwidth optimization modules 104, data networks 106, and servers 108 may be included in the system 100.

As used herein, the term "data bandwidth" may refer to an amount of data that can be transmitted in a fixed amount of time. For example, data bandwidth may refer to an amount of data that can be transmitted during a second, a minute, an hour, a day, a week, a month, a billing cycle, and so forth. In certain embodiments, data bandwidth may be synonymous with a data quota or a monthly quota.

In one embodiment, the information handling devices 102 include computing devices, such as desktop computers, laptop computers, personal digital assistants (PDAs), tablet computers, smart phones, smart televisions (e.g., televisions connected to the Internet), set-top boxes, game consoles, security systems (including security cameras), vehicle on-board computers, network devices (e.g., routers, switches, modems), or the like. In some embodiments, the information handling devices 102 include wearable devices, such as smart watches, fitness bands, optical head-mounted displays, or the like.

The information handling devices 102 may access the data network 106 directly using a network connection (illustrated by an arrow between the information handling device 102 and the data network 106) and/or the information handling devices 102 may access the data network 106 through the network connection of another of the information handling devices 102 (illustrated by an arrow between two different information handling devices 102).

The information handling devices 102 and/or the servers 108 may include an embodiment of the data bandwidth optimization module 104. In certain embodiments, the data bandwidth optimization module 104 may determine a data bandwidth limitation of a network connection of a first electronic device (e.g., one of the information handling devices 102). The data bandwidth optimization module 104 may receive a request from a second electronic device (e.g., another of the information handling devices 102) to access the network connection of the first electronic device. The data bandwidth optimization module 104 may also provide data corresponding to the data bandwidth limitation to the second electronic device in response to receiving the request from the second electronic device to access the network connection. In this manner, the data bandwidth optimization module 104 may be used to optimize data bandwidths.

The data network 106, in one embodiment, includes a digital communication network that transmits digital communications. The data network 106 may include a wireless network, such as a wireless cellular network, a local wireless network, such as a Wi-Fi network, a Bluetooth® network, a near-field communication ("NFC") network, an ad hoc network, and/or the like. The data network 106 may include a WAN, a storage area network ("SAN"), a LAN, an optical fiber network, the internet, or other digital communication network. The data network 106 may include two or more networks. The data network 106 may include one or more servers, routers, switches, and/or other networking equipment. The data network 106 may also include computer readable storage media, such as a hard disk drive, an optical drive, non-volatile memory, RAM, or the like.

In one embodiment, the servers 108 include computing devices, such as desktop computers, laptop computers, mainframe computers, cloud servers, virtual servers, and/or the like. In some embodiments, the servers 108 are designed as application servers, email servers, database servers, file servers, game servers, home servers, media servers, web servers, and/or the like. In certain embodiments, the servers 108 store data, and may be designed to be accessed by one or more information handling devices 102 through the network 106. In certain embodiments, the servers 108 may include at least a portion of the data bandwidth optimization module 104 and may perform one or more operations of the data bandwidth optimization module 104.

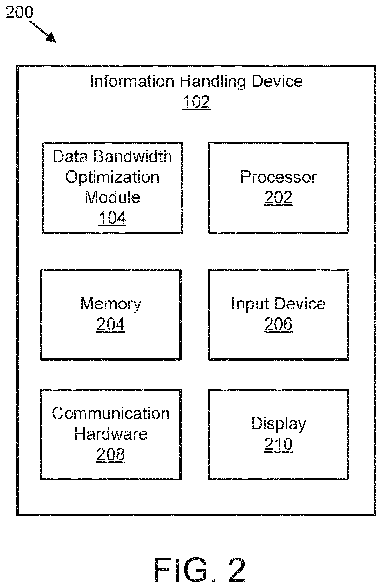

Figure 2 depicts one embodiment of an apparatus 200 that may be used for data bandwidth optimization. The apparatus 200 includes one embodiment of the information handling device 102. Furthermore, the information handling device 102 may include the data bandwidth optimization module 104, a processor 202, a memory 204, an input device 206, communication hardware 208, and a display 210. In some embodiments, the input device 206 and the display 210 are combined into a single device, such as a touchscreen.

The processor 202, in one embodiment, may include any known controller capable of executing computer-readable instructions and/or capable of performing logical operations. For example, the processor 202 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 202 executes instructions stored in the memory 204 to perform the methods and routines described herein. The processor 202 is communicatively coupled to the memory 204, the data bandwidth optimization module 104, the input device 206, the communication hardware 208, and the display 210.

The memory 204, in one embodiment, is a computer readable storage medium. In some embodiments, the memory 204 includes volatile computer storage media. For example, the memory 204 may include a RAM, including dynamic RAM ("DRAM"), synchronous dynamic RAM ("SDRAM"), and/or static RAM ("SRAM"). In some embodiments, the memory 204 includes non-volatile computer storage media. For example, the memory 204 may include a hard disk drive, a flash memory, or any other suitable non-volatile computer storage device. In some embodiments, the memory 204 includes both volatile and non-volatile computer storage media.

In some embodiments, the memory 204 stores data relating to data limitation. In some embodiments, the memory 204 also stores program code and related data, such as an operating system or other controller algorithms operating on the information handling device 102. The information handling device 102 may use the data bandwidth optimization module 104 for data optimization.

As may be appreciated, the data bandwidth optimization module 104 may include computer hardware, computer software, or a combination of both computer hardware and computer software. For example, the data bandwidth optimization module 104 may include circuitry, or a processor, used to determine a data bandwidth limitation of a network connection of a first electronic device. As another example, the data bandwidth optimization module 104 may include computer program code that receives a request from a second electronic device to access the network connection of the first electronic device.

The input device 206, in one embodiment, may include any known computer input device including a touch panel, a button, a keyboard, a stylus, or the like. In some embodiments, the input device 206 may be integrated with the display 210, for example, as a touchscreen or similar touch-sensitive display. In some embodiments, the input device 206 includes a touchscreen such that text may be input using a virtual keyboard displayed on the touchscreen and/or by handwriting on the touchscreen. In some embodiments, the input device 206 includes two or more different devices, such as a keyboard and a touch panel. The communication hardware 208 may facilitate communication with other devices. For example, the communication hardware 208 may enable communication via Bluetooth®, Wi-Fi, and so forth.

The display 210, in one embodiment, may include any known electronically controllable display or display device. The display 210 may be designed to output visual, audible, and/or haptic signals. In some embodiments, the display 210 includes an electronic display capable of outputting visual data to a user. For example, the display 210 may include, but is not limited to, an LCD display, an LED display, an OLED display, a projector, or similar display device capable of outputting images, text, or the like to a user. As another, non-limiting, example, the display 210 may include a wearable display such as a smart watch, smart glasses, a heads-up display, or the like. Further, the display 210 may be a component of a smart phone, a personal digital assistant, a television, a table computer, a notebook (laptop) computer, a personal computer, a vehicle dashboard, or the like.

In certain embodiments, the display 210 includes one or more speakers for producing sound. For example, the display 210 may produce an audible alert or notification (e.g., a beep or chime) upon initiating data limitation. In some embodiments, the display 210 includes one or more haptic devices for producing vibrations, motion, or other haptic feedback. For example, the display 210 may produce haptic feedback upon initiating data limitation.

In some embodiments, all or portions of the display 210 may be integrated with the input device 206. For example, the input device 206 and display 210 may form a touchscreen or similar touch-sensitive display. In other embodiments, the display 210 may be located near the input device 206. In certain embodiments, the display 210 may receive instructions and/or data for output from the processor 202 and/or the data bandwidth optimization module 104.

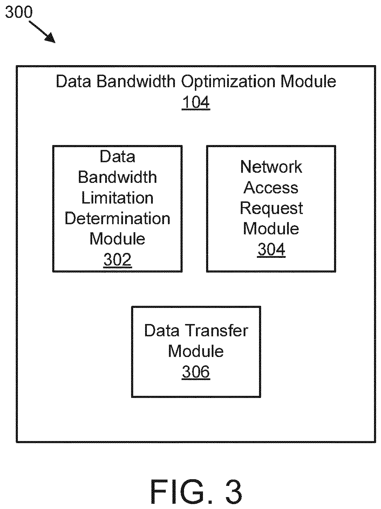

Figure 3 depicts a schematic block diagram illustrating one embodiment of an apparatus 300 that includes one embodiment of the data bandwidth optimization module 104. Furthermore, the data bandwidth optimization module 104 includes a data bandwidth limitation determination module 302, a network access request module 304, and a data transfer module 306.

The data bandwidth limitation determination module 302 may be used to determine a data bandwidth limitation of a network connection of a first electronic device (e.g., an information handling device 102). The data bandwidth limitation may be a limit on an amount of data that is available to the first electronic device through the network connection for a specified time period. The limit on the amount of data may be an actual data limit or may be a limit based on a data plan that may be increased for an additional fee. The network connection may be an internet connection, a cellular connection, a wireless connection, and so forth. The network connection, in certain embodiments, may be used to access the Internet. The specified time period may be a billing cycle, a day, a week, a month, a quarter, a year, or the like.

In certain embodiments, the data bandwidth limitation determination module 302 may be used to compute a data quota of the network connection of the first electronic device. In such embodiments, the data bandwidth limitation determination module 302 may compute a percent of the data quota used during a time period. Furthermore, in some embodiments, the data bandwidth determination module 302 may compute the percent of the data quota used during a billing cycle.

In some embodiments, the network access request module 304 may be used to receive a request from a second electronic device (e.g., another information handling device 102) to access the network connection of the first electronic device. In other embodiments, the network access request module 304 may be used to send a request from the second electronic device to access the network connection of the first electronic device.

In one embodiment, the data transfer module 306 may provide data corresponding to the data bandwidth limitation to the second electronic device in response to receiving the request from the second electronic device to access the network connection. In another embodiment, the data transfer module 306 may receive data corresponding to the data bandwidth limitation from the first electronic device. The data corresponding to the data bandwidth limitation may include data indicating that the network connection has limited data bandwidth, data indicating that the network connection has unlimited data bandwidth, data indicating a level to which the data bandwidth is limited (e.g., low, medium, high), data indicating how much data bandwidth is available, data indicating how much data bandwidth is used, data indicating a beginning of a time period for use of the data bandwidth, data indicating an end of a time period for use of the data bandwidth, data indicating a current position during a time period for use of the data bandwidth, and so forth. The data transfer module 306 may provide data from the first electronic device to the second electronic device using any suitable method or protocol.

For example, in one embodiment, the first electronic device may be a device, such as a smart phone, a router, etc., having a network connection with limited data bandwidth. The first electronic device may have a time period (e.g., monthly cycle, billing cycle, etc.) network connection data limit, such as a limit of 1 gigabyte ("GB") per billing cycle. Moreover, the first electronic device may keep track of how much data out of the data limit has been used during the time period. The data bandwidth limitation determination module 302 may determine the network connection data limit of the first electronic device. Moreover, the first electronic device may be setup as a mobile hotspot, as a router, and/or for tethering in order to share network connection data bandwidth with another device.

Accordingly, a second electronic device may send a request to the first electronic device to access the network connection data bandwidth. The first electronic device may respond to the request from the second electronic device and include data corresponding to the data bandwidth limitation, such as that the first electronic device has a limit of 1 GB of data per month. In some embodiments, the first electronic device may also send the second electronic device information about how much of the data bandwidth limitation for the time period has been used, and how many days of the time period have elapsed. Accordingly, the second electronic device may have information that can be used to limit data usage at the second electronic device.

In certain embodiments, the data provided from the first electronic device to the second electronic device may be used to dynamically (e.g., automatically) switch a connection setting of the second electronic device to a metered connection. A metered connection setting may place the second electronic device in a condition in which it will attempt to use less bandwidth on the network. The metered connection setting may have different levels of attempting to use less bandwidth on the network depending on how much data bandwidth has been used prior to the second electronic device using the network connection of the first electronic device.

In one embodiment, the data provided from the first electronic device to the second electronic device may be part of a dynamic host configuration protocol ("DHCP") packet. For example, DHCP packets are variable length and have "Options" fields that may be used to provide the data from the first electronic device to the second electronic device to inform the second electronic device that it should reduce its data usage as necessary. In certain embodiments, if the second electronic device does not accept such a message, the second electronic device may be refused to use the network connection of the first electronic device and/or the data bandwidth available to the second electronic device may be limited by the first electronic device.

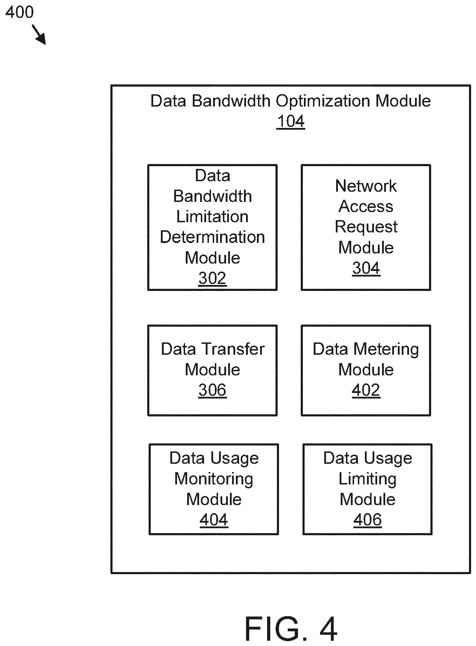

Figure 4 is a schematic block diagram illustrating another embodiment of an apparatus 400 that includes one embodiment of the data bandwidth optimization module 104. Furthermore, the data bandwidth optimization module 104 includes one embodiment of the data bandwidth limitation determination module 302, the network access request module 304, and the data transfer module 306, that may be substantially similar to the data bandwidth limitation determination module 302, the network access request module 304, and the data transfer module 306 described in relation to Figure 3. The data bandwidth optimization module 104 also includes a data metering module 402, a data usage monitoring module 404, and a data usage limiting module 406.

In certain embodiments, the data metering module 402 is used to determine a metering level for data provided from the first electronic device to the second electronic device. In some embodiments, the metering level may include a high data output level, a medium data output level, and a low data output level. For example, a high data output level may enable high data bandwidth usage, such as for streaming video, application installation, web browsing, and so forth. A medium data output level may block streaming video, but enable application installation and web browsing. A low data output level may only enable web browsing. The data metering module 402 may provide the metering level to the second electronic device, or may meter the bandwidth usage at the first electronic device.

In one embodiment, the data usage monitoring module 404 is used to monitor an amount of data used by the second electronic device. The data usage monitoring module 404 may be positioned at the second electronic device to monitor the amount of data used at a local level and/or the data usage monitoring module 404 may be positioned at the first electronic device to monitor the amount of data used based on an amount of data sent to/received from the second electronic device. In certain embodiments, the data usage monitoring module 404 may be used by the first electronic device to monitor how much data is used from its network connection. In one embodiment, the data usage monitoring module 404 may facilitate displaying to a user of the first and/or second electronic device an amount of data bandwidth used and/or an amount of data bandwidth available for use, such as in a web browser, via a taskbar icon, a pop-up, a window, and so forth.

The data usage limiting module 406 is used to limit an amount of data used by the second electronic device. The data usage limiting module 406 may be positioned at the second electronic device to limit the amount of data used at a local level and/or the data usage limiting module 406 may be positioned at the first electronic device to limit the amount of data used as measured by the first electronic device. In certain embodiments, the data usage limiting module 406 may limit the second electronic device to use a high amount of data, a medium amount of data, or a low amount of data.

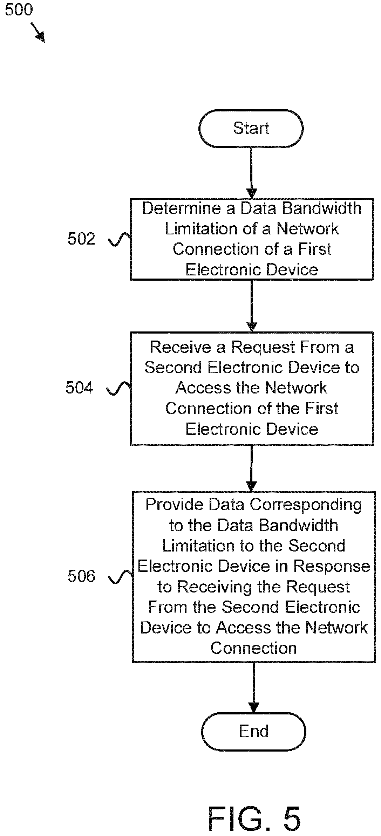

Figure 5 is a schematic flow chart diagram illustrating one embodiment of a method 500 for data bandwidth optimization. In some embodiments, the method 500 is performed by an apparatus, such as the information handling device 102. In other embodiments, the method 500 may be performed by a module, such as the data bandwidth optimization module 104. In certain embodiments, the method 500 may be performed by a processor executing program code, for example, a microcontroller, a microprocessor, a CPU, a GPU, an auxiliary processing unit, a FPGA, or the like.

The method 500 may include determining 502 a data bandwidth limitation of a network connection of a first electronic device (e.g., an information handling device 102). For example, the data bandwidth may be limited to a certain amount of data over a certain amount of time. In some embodiments, determining 502 the data bandwidth limitation of the network connection of the first electronic device includes computing a data quota of the network connection of the first electronic device. In certain embodiments, determining 502 the data bandwidth limitation of the network connection of the first electronic device includes computing a percent of the data quota used during a time period. In one embodiment, computing the percent of the data quota used during the time period includes computing the percent of the data quota used during the billing cycle.

The method 500 may also include receiving 504 a request from a second electronic device (e.g., another information handling device 102) to access the network connection of the first electronic device. The method 500 may provide 506 data corresponding to the data bandwidth limitation to the second electronic device in response to receiving the request from the second electronic device to access the network connection. In one embodiment, providing 506 data corresponding to the data bandwidth limitation to the second electronic device includes providing data in a DHCP packet. Then the method 500 may end.

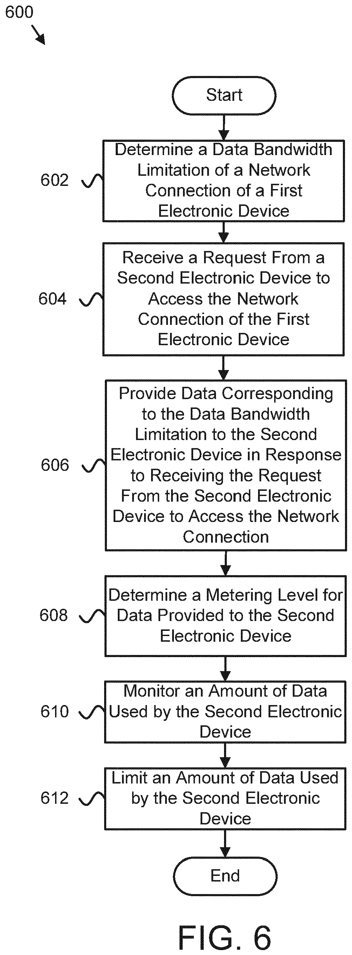

Figure 6 is a schematic flow chart diagram illustrating another embodiment of a method 600 for data bandwidth optimization. In some embodiments, the method 600 is performed by an apparatus, such as the information handling device 102. In other embodiments, the method 600 may be performed by a module, such as the data bandwidth optimization module 104. In certain embodiments, the method 600 may be performed by a processor executing program code, for example, a microcontroller, a microprocessor, a CPU, a GPU, an auxiliary processing unit, a FPGA, or the like.

The method 600 may include determining 602 a data bandwidth limitation of a network connection of a first electronic device (e.g., an information handling device 102). For example, the data bandwidth may be limited to a certain amount of data over a certain amount of time. In some embodiments, determining 602 the data bandwidth limitation of the network connection of the first electronic device includes computing a data quota of the network connection of the first electronic device. In certain embodiments, determining 602 the data bandwidth limitation of the network connection of the first electronic device includes computing a percent of the data quota used during a time period. In one embodiment, computing the percent of the data quota used during the time period includes computing the percent of the data quota used during the billing cycle.

The method 600 may also include receiving 604 a request from a second electronic device (e.g., another information handling device 102) to access the network connection of the first electronic device. The method 600 may provide 606 data corresponding to the data bandwidth limitation to the second electronic device in response to receiving the request from the second electronic device to access the network connection. In one embodiment, providing 606 data corresponding to the data bandwidth limitation to the second electronic device includes providing data in a DHCP packet.

The method 600 may include determining 608 a metering level for data provided to the second electronic device. In one embodiment, determining 608 the metering level for data provided to the second electronic device includes comparing a percent of a data quota of the network connection used during a billing cycle with a percent of the number of days that have passed in the billing cycle.

The method 600 may include monitoring 610 an amount of data used by the second electronic device. The method 600 may also include limiting 612 the amount of data used by the second electronic device. Then the method 600 may end.

Embodiments may be practiced in other specific forms. The described embodiments are to be considered in all respects only as illustrative and not restrictive. The scope of the invention is, therefore, indicated by the appended claims rather than by the foregoing description.

## Claims

1. An apparatus comprising:
a processor;
a memory that stores code executable by the processor, the code comprising:
code adapted to determine (602) a data bandwidth limitation of a network connection of a first electronic device, wherein the first electronic device is a smart phone being setup as a mobile hotspot;
code adapted to receive (604) a request from a second electronic device to access the network connection of the first electronic device;
code adapted to provide (606) data corresponding to the data bandwidth limitation to the second electronic device in response to receiving the request from the second electronic device to access the network connection
code adapted to determine (608) a metering level for data provided to the second electronic device;
code adapted to monitor (610) an amount of data used by the second electronic device; and
code adapted to limit (612) the amount of data used by the second electronic device depending on how much data bandwidth has been used prior to the second electronic device using the network connection of the first electronic device according to the determined metering level.

2. The apparatus of claim 1, wherein the code adapted to determine the data bandwidth limitation of the network connection of the first electronic device comprises code adapted to compute a data quota of the network connection of the first electronic device.

3. The apparatus of claim 2, wherein the code adapted to determine the data bandwidth limitation of the network connection of the first electronic device comprises code adapted to compute a percent of the data quota used during a time period.

4. The apparatus of claim 3, wherein the code adapted to compute the percent of the data quota used during the time period comprises code adapted to compute the percent of the data quota used during a billing cycle.

5. The apparatus of claim 1, wherein the metering level comprises a high data output level, a medium data output level, and a low data output level.

6. A method comprising:
determining (602), by use of a processor, a data bandwidth limitation of a network connection of a first electronic device, wherein the first electronic device is a smart phone being setup as a mobile hotspot;
receiving (604) a request from a second electronic device to access the network connection of the first electronic device;
providing (606) data corresponding to the data bandwidth limitation to the second electronic device in response to receiving the request from the second electronic device to access the network connection;
determining (608) a metering level for data provided to the second electronic device
monitoring (610) an amount of data used by the second electronic device; and
limiting (612) the amount of data used by the second electronic device depending on how much data bandwidth has been used prior to the second electronic device using the network connection of the first electronic device according to the determined metering level.

7. The method of claim 6, wherein determining the data bandwidth limitation of the network connection of the first electronic device comprises computing a data quota of the network connection of the first electronic device.

8. The method of claim 7, wherein determining the data bandwidth limitation of the network connection of the first electronic device comprises computing a percent of the data quota used during a time period.

9. The method of claim 8, wherein computing the percent of the data quota used during the time period comprises computing the percent of the data quota used during a billing cycle.

10. The method of claim 6, wherein determining the metering level for data provided to the second electronic device comprises comparing a percent of a data quota of the network connection used during a billing cycle with a percent of the number of days that have passed in the billing cycle.

11. The method of claim 6, wherein providing data corresponding to the data bandwidth limitation to the second electronic device comprises providing data in a dynamic host configuration protocol ("DHCP") packet.

12. A program product comprising a computer readable storage medium that stores code executable by a processor, the executable code comprising code to perform:
determining (602) a data bandwidth limitation of a network connection of a first electronic device, wherein the first electronic device is a smart phone being setup as a mobile hotspot;
receiving (604) a request from a second electronic device to access the network connection of the first electronic device;
providing (606) data corresponding to the data bandwidth limitation to the second electronic device in response to receiving the request from the second electronic device to access the network connection;
determining (608) a metering level for data provided to the second electronic device;
monitoring (610) an amount of data used by the second electronic device; and
limiting (612) an amount of data used by the second electronic device depending on how much data bandwidth has been used prior to the second electronic device using the network connection of the first electronic device according to the determined metering level.

## Patentansprüche

1. Vorrichtung, umfassend:
einen Prozessor;
einen Speicher, der Code speichert, der von dem Prozessor ausführbar ist, wobei der Code umfasst:
Code, der ausgebildet ist, eine
Datenbandbreitenbeschränkung einer Netzwerkverbindung eines ersten elektronischen Geräts zu bestimmen (602), wobei das erste elektronische Gerät ein Smartphone ist, das als ein mobiler Hotspot eingerichtet ist;
Code, der ausgebildet ist, eine Anforderung von einem zweiten elektronischen Gerät auf die Netzwerkverbindung des ersten elektronischen Geräts zuzugreifen zu empfangen (604) ;
Code, der ausgebildet ist, Daten, die der Datenbandbreitenbeschränkung entsprechen, in Erwiderung auf das Empfangen der Anforderung von dem zweiten elektronischen Gerät auf die Netzwerkverbindung zuzugreifen, an das zweite elektronische Gerät bereitzustellen (606);
Code, der ausgebildet ist, einen Messpegel für Daten, die an das zweite elektronische Gerät bereitgestellt werden, zu bestimmen (608);
Code, der ausgebildet ist, eine Datenmenge, die von dem zweiten elektronischen Gerät verwendet wird, zu überwachen (610); und
Code, der ausgebildet ist, die Datenmenge, die von dem zweiten elektronischen Gerät verwendet wird, in Abhängigkeit davon, wie viel Datenbandbreite verwendet wurde, bevor das zweite elektronische Gerät die Netzwerkverbindung des ersten elektronischen Geräts verwendet, entsprechend dem bestimmten Messpegel zu beschränken (612).

2. Vorrichtung nach Anspruch 1, wobei der Code, der ausgebildet ist, die Datenbandbreitenbeschränkung der Netzwerkverbindung des ersten elektronischen Geräts zu bestimmen, Code umfasst, der ausgebildet ist, eine Datenquote der Netzwerkverbindung des ersten elektronischen Geräts zu berechnen.

3. Vorrichtung nach Anspruch 2, wobei der Code, der ausgebildet ist, die Datenbandbreitenbeschränkung der Netzwerkverbindung des ersten elektronischen Geräts zu bestimmen, Code umfasst, der ausgebildet ist, einen Prozentsatz der Datenquote, die während einer Zeitperiode verwendet wurde, zu berechnen.

4. Vorrichtung nach Anspruch 3, wobei der Code, der ausgebildet ist, den Prozentsatz der Datenquote, die während der Zeitperiode verwendet wurde, zu berechnen, Code umfasst, der ausgebildet ist, den Prozentsatz der Datenquote, die während eines Abrechnungszyklus verwendet wurde, zu berechnen.

5. Vorrichtung nach Anspruch 1, wobei der Messpegel einen hohen Datenausgabepegel, einen mittleren Datenausgabepegel und einen niedrigen Datenausgabepegel umfasst.

6. Verfahren, umfassend:
Bestimmen (602) einer Datenbandbreitenbeschränkung einer Netzwerkverbindung eines ersten elektronischen Geräts durch Verwendung eines Prozessors, wobei das erste elektronische Gerät ein Smartphone ist, das als ein mobiler Hotspot eingerichtet ist;
Empfangen (604) einer Anforderung von einem zweiten elektronischen Gerät auf die Netzwerkverbindung des ersten elektronischen Geräts zuzugreifen;
Bereitstellen (606) von Daten an das zweite elektronische Gerät, die der Datenbandbreitenbeschränkung entsprechen, in Erwiderung auf das Empfangen der Anforderung von dem zweiten elektronischen Gerät auf die Netzwerkverbindung zuzugreifen;
Bestimmen (608) eines Messpegels für Daten, die an das zweite elektronische Gerät bereitgestellt werden;
Überwachen (610) einer Datenmenge, die von dem zweiten elektronischen Gerät verwendet wird; und
Beschränken (612) der Datenmenge, die von dem zweiten elektronischen Gerät verwendet wird, in Abhängigkeit davon, wie viel Datenbandbreite verwendet wurde, bevor das zweite elektronische Gerät die Netzwerkverbindung des ersten elektronischen Geräts verwendet, entsprechend dem bestimmten Messpegel.

7. Verfahren nach Anspruch 6, wobei das Bestimmen der Datenbandbreitenbeschränkung der Netzwerkverbindung des ersten elektronischen Geräts ein Berechnen einer Datenquote der Netzwerkverbindung des ersten elektronischen Geräts umfasst.

8. Verfahren nach Anspruch 7, wobei das Bestimmen der Datenbandbreitenbeschränkung der Netzwerkverbindung des ersten elektronischen Geräts ein Berechnen eines Prozentsatzes der Datenquote, die während einer Zeitperiode verwendet wurde, umfasst.

9. Verfahren nach Anspruch 8, wobei das Berechnen des Prozentsatzes der Datenquote, die während der Zeitperiode verwendet wurde, ein Berechnen des Prozentsatzes der Datenquote, die während eines Abrechnungszyklus verwendet wurde, umfasst.

10. Verfahren nach Anspruch 6, wobei das Bestimmen des Messpegels für Daten, die an das zweite elektronische Gerät bereitgestellt werden, ein Vergleichen eines Prozentsatzes einer Datenquote der Netzwerkverbindung, die während eines Abrechnungszyklus verwendet wurde, mit einem Prozentsatz der Anzahl von Tagen, die in dem Abrechnungszyklus vergangen sind, umfasst.

11. Verfahren nach Anspruch 6, wobei das Bereitstellen von Daten, die der Datenbandbreitenbeschränkung entsprechen, an das zweite elektronische Gerät ein Bereitstellen von Daten in einem Paket eines dynamischen Host-Konfigurationsprotokolls ("DHCP") umfasst.

12. Programmprodukt, umfassend ein computerlesbares Speichermedium, das Code speichert, der von einem Prozessor ausführbar ist, wobei der ausführbare Code Code umfasst um auszuführen:
Bestimmen (602) einer Datenbandbreitenbeschränkung einer Netzwerkverbindung eines ersten elektronischen Geräts,
wobei das erste elektronische Gerät ein Smartphone ist, das als ein mobiler Hotspot eingerichtet ist;
Empfangen (604) einer Anforderung von einem zweiten elektronischen Gerät auf die Netzwerkverbindung des ersten elektronischen Geräts zuzugreifen;
Bereitstellen (606) von Daten an das zweite elektronische Gerät, die der Datenbandbreitenbeschränkung entsprechen, in Erwiderung auf das Empfangen der Anforderung von dem zweiten elektronischen Gerät auf die Netzwerkverbindung zuzugreifen;
Bestimmen (608) eines Messpegels für Daten, die an das zweite elektronische Gerät bereitgestellt werden;
Überwachen (610) einer Datenmenge, die von dem zweiten elektronischen Gerät verwendet wird; und
Beschränken (612) der Datenmenge, die von dem zweiten elektronischen Gerät verwendet wird, in Abhängigkeit davon, wie viel Datenbandbreite verwendet wurde, bevor das zweite elektronische Gerät die Netzwerkverbindung des ersten elektronischen Geräts verwendet, entsprechend dem bestimmten Messpegel.

## Revendications

1. Appareil comprenant :
un processeur ;
une mémoire qui met en mémoire le code exécutable par le processeur, le code comprenant :
un code conçu pour déterminer (602) une limitation de large de bande de données d'une connexion réseau d'un premier dispositif électronique, le premier dispositif électronique étant un téléphone intelligent étant configuré comme un point d'accès public mobile ;
un code conçu pour recevoir (604) une demande provenant d'un second dispositif électronique pour accéder à la connexion électronique du premier dispositif électronique ;
un code conçu pour fournir (606) des données correspondant à la limitation de largeur de bande de données au second dispositif électronique en réponse à la réception de la demande en provenance du second dispositif électronique pour accéder à la connexion réseau
un code conçu pour déterminer (608) un niveau de mesure pour des données fournies au second dispositif électronique ;
un code conçu pour surveiller (610) une quantité de données utilisées par le second dispositif électronique ; et
un code conçu pour limiter (612) la quantité de données utilisées par le second dispositif électronique en fonction de la quantité de largeur de bande de données utilisées avant que le second dispositif électronique n'utilise la connexion réseau du premier dispositif électronique en fonction du niveau de mesure déterminé.

2. Appareil selon la revendication 1, le code conçu pour déterminer la limitation de largeur de bande de données de la connexion réseau du premier dispositif électronique comprend
un code conçu pour calculer un quota de données de la connexion réseau du premier dispositif électronique.

3. Appareil selon la revendication 2, le code conçu pour déterminer la limitation de la largeur de bande de données de la connexion réseau du premier dispositif électronique comprenant le code conçu pour calculer un pourcentage du quota de données utilisé pendant une période de temps.

4. Appareil selon la revendication 3, le code conçu pour calculer le pourcentage du quota de données utilisé pendant la période de temps comprenant un code adapté pour calculer le pourcentage du quota de données pendant un cycle de facturation.

5. Appareil selon la revendication 1, le niveau de lissage comprenant un niveau de sortie de données élevé, un niveau de sortie de donnée moyen et un niveau de sortie de données bas.

6. Procédé consistant à :
déterminer (602) à l'aide d'un processeur, une limite de largeur de bande de données d'une connexion réseau d'un premier dispositif électronique, le premier dispositif électronique étant un téléphone intelligent configuré en tant que point d'accès public mobile ;
recevoir (604) une demande en provenance d'un second dispositif électronique pour accéder à la connexion réseau du premier dispositif électronique ;
fournir (606) des données correspondantes à la limitation de largeur de bande de données au second dispositif électronique en réponse à la réception de la demande en provenance du second dispositif électronique pour accéder à la connexion réseau ;
déterminer (608) un niveau de lissage pour les données fournies au second dispositif électronique surveiller (610) une quantité de données utilisées par le second dispositif électronique ;
et
limiter (612) la quantité de données utilisées par le second dispositif électronique en fonction de la quantité de largeur de bande utilisée avant que le second dispositif électronique n'utilise la connexion réseau du premier dispositif électronique en fonction du niveau de lissage déterminé.

7. Procédé selon la revendication 6, la détermination de la limite de largeur de bande de données de la connexion réseau du premier dispositif électronique consistant à calculer un quota de données de la connexion réseau du premier dispositif électronique.

8. Procédé selon la revendication 7, la détermination de la limite de largeur de bande de données de la connexion réseau du premier dispositif électronique consistant à calculer un pourcentage du quota de données pendant une période de temps.

9. Procédé selon la revendication 8, le calcul du pourcentage du quota de données utilisé pendant la période de temps consistant à calculer le pourcentage du quota de données utilisé pendant un cycle de facturation.

10. Procédé selon la revendication 6, la détermination du niveau de lissage pour les données fournies au second dispositif électronique consistant à comparer un pourcentage d'un quota de données de la connexion réseau pendant un cycle de facturation à un pourcentage du nombre de jours qui ont passé dans le cycle de facturation.

11. Procédé selon la revendication 6, la fourniture de données correspondant à la limitation de largeur de bande au second dispositif électronique consistant à fournir les données dans un paquet de protocole de configuration dynamique des hôtes (« DHPC »).

12. Produit programme comprenant une mémoire lisible par ordinateur qui met en mémoire un code exécutable par un processeur, le code exécutable comprenant un code pour :
déterminer (602) une limite de largeur de bande de données d'une connexion réseau du premier dispositif électronique, le premier dispositif électronique étant un téléphone intelligent configuré comme étant un point d'accès public mobile ;
fournir (606) des données correspondant à la limite de largeur de bande de données au second dispositif électronique en réponse à la réception de la demande en provenance du second dispositif électronique pour accéder à la connexion réseau ;
déterminer (608) un niveau de lissage pour les données fournies au second dispositif électronique ;
surveiller (610) une quantité de données utilisées par le second dispositif électronique ;
et
limiter (612) une quantité de données utilisées par le second dispositif électronique en fonction de la quantité de largeur de bande de données utilisée avant que le second dispositif électrique n'utilise la connexion réseau du premier dispositif électronique en fonction du niveau de lissage déterminé.
